# EUROPÄISCHE PATENTSCHRIFT

(11) **EP 3 465 326 B1**
(45) Veröffentlichungstag und Bekanntmachung des Hinweises auf die Patenterteilung: **01.07.2020**
(21) Anmeldenummer: 17726264.9
(22) Anmeldetag: 24.05.2017
(51) Int. Cl.: G02B 27/01

(54) **PROJEKTIONSVORRICHTUNG MIT EINER ABSCHATTUNGSBLENDE FÜR SONNENSTRAHLUNG, SOWIE KRAFTFAHRZEUG**
PROJECTION APPARATUS WITH A SHADING STOP FOR SOLAR RADIATION, AND MOTOR VEHICLE
DISPOSITIF DE PROJECTION DOTÉ D'UN BANDEAU D'OMBRAGE POUR PROTÉGER DES RAYONS DU SOLEIL ET VÉHICULE À MOTEUR

(30) Priorität: 30.05.2016 DE 102016109879
(43) Veröffentlichungstag der Anmeldung: 10.04.2019
(73) Patentinhaber: Valeo Schalter und Sensoren GmbH, 74321 Bietigheim-Bissingen (DE)
(72) Erfinder: KUNTZE, Daniel, 74321 Bietigheim-Bissingen (DE); SIMONIS, Karl, 74321 Bietigheim-Bissingen (DE); SCHOCH, Lars, 74321 Bietigheim-Bissingen (DE)
(74) Vertreter: Pothmann, Karsten
(86) Internationale Anmeldenummer: PCT/EP2017/062528
(87) Internationale Veröffentlichungsnummer: WO 2017/207381

(56) Entgegenhaltungen:
- DE-C1- 4 011 495
- DE-T2- 69 022 932
- US-A- 4 978 214
- US-A1- 2012 176 683

## Beschreibung

Die Erfindung betrifft eine optische Projektionsvorrichtung zur Projektion eines virtuellen Bilds in einem Kraftfahrzeug, welche ein Gehäuse aufweist, in dem eine Lichterzeugungsvorrichtung und eine Bilderzeugungseinheit zur Erzeugung des virtuellen Bild aus dem von der Lichterzeugungsvorrichtung emittierten Licht angeordnet sind. Das Gehäuse weist eine Öffnung auf, durch welche das virtuelle Bild aus dem Gehäuse zu einem an dem Gehäuse angeordneten Außenspiegel der Projektionsvorrichtung abstrahlbar ist. Die Erfindung betrifft auch ein Kraftfahrzeug mit einer derartigen Projektionsvorrichtung.

Bekannte Projektionsvorrichtungen als optische Anzeigevorrichtungen in Kraftfahrzeugen nutzen Spiegel, um eine Information in eine spezifische Richtung projizierend anzuzeigen. Hierbei handelt es sich zumeist um sogenannte Combinerspiegel oder Kombinierspiegel, welche eine semitransparente Spiegelfläche aufweisen, durch welche ein Überlagern einer auf den Spiegel projizierten Information, welche von diesem reflektiert wird, mit einer durch den Spiegel hindurch scheinenden Information aus einer hinter dem Spiegel gelegenen Umgebung ermöglicht. Wird die Projektionsvorrichtung nicht benötigt, wird zum Schutz des Spiegels dieser beispielsweise in ein Spiegelfach eingezogen oder eingeklappt. Derartige Anzeigevorrichtungen sind optische Projektionsvorrichtungen, mit welchen virtuell erzeugte Bilder projiziert werden, und welche als Kopf-oben-Anzeigevorrichtungen, die als Head-up-Displays bezeichnet werden, ausgebildet sind.

Bei diesen Kopf-oben-Anzeigevorrichtungen gibt es Ausführungen, bei welchen das virtuelle Bild an die Innenseite der Windschutzscheibe projiziert wird, so dass es vom Beobachter, insbesondere dem Fahrer, an der Innenseite betrachtet werden kann. Des Weiteren sind dazu unterschiedliche Ausführungen von Kopf-oben-Anzeigevorrichtungen bekannt, bei welchen das virtuelle Bild nicht auf die Windschutzscheibe projiziert wird, sondern mit einem zusätzlichen Spiegel, dem oben genannten Kombinierspiegel, der Kopf-oben-Anzeigevorrichtung zum Beobachter hin projiziert wird und somit bei insbesondere richtiger Einstellung des Kombinierspiegels in dessen Gesicht projiziert wird.

Aus der US 2012/0176683 A1 ist ein Positionierungssystem für einen Kombinierspiegel bekannt, mittels welchem der Kombinierspiegel in eine Gebrauchsstellung gebracht werden kann und dort ein Nachjustieren einer Winkelposition des Kombinierspiegels durchgeführt wird. Auch die DE 40 11 495 C1 beschreibt eine Kopf-oben-Anzeigevorrichtung, bei welcher ein Spiegel unterschiedlich positioniert werden kann. In einer Verstaustellung wird der Spiegel dort eingeklappt und durch einen Deckel geschützt. DE 690 22 93 T2 offenbart ein "Head-up Display" für Kraftfahrzeuge mit antireflektierendem Jalousie-Filter.

Bei bekannten Ausführungen ist die einfallende Sonnenstrahlung nachteilig für die Wahrnehmung des Bildes durch einen Beobachter.

Es ist Aufgabe der vorliegenden Erfindung, eine Projektionsvorrichtung und ein Kraftfahrzeug zu schaffen, bei welcher bzw. bei welchem der Einfluss der Sonnenstrahlung auf die Wahrnehmung des virtuellen Bildes reduziert ist.

Diese Aufgabe wird durch eine Projektionsvorrichtung und ein Kraftfahrzeug gemäß den unabhängigen Ansprüchen gelöst.

Eine erfindungsgemäße Projektionsvorrichtung ist zur Projektion eines virtuellen Bilds in einem Kraftfahrzeug ausgebildet. Die Projektionsvorrichtung, die als Kopf-oben-Anzeigevorrichtung und somit als sogenanntes Head-up-Display ausgebildet ist, umfasst ein Gehäuse, in dem eine Lichterzeugungsvorrichtung und eine Bilderzeugungseinheit angeordnet sind. Die Lichterzeugungsvorrichtung ist zur grundsätzlichen Erzeugung von Licht ausgebildet, welches zur Bilderzeugungseinheit gelangt und dort durch diese Bilderzeugungseinheit aus diesem Licht der Lichterzeugungsvorrichtung das virtuelle Bild erzeugt wird. Das Gehäuse weist eine Öffnung auf, durch welche das virtuelle Bild aus dem Gehäuse zu einem an dem Gehäuse angeordneten Außenspiegel, der Bestandteil der Projektionsvorrichtung ist, abstrahlbar ist. Ein wesentlicher Gedanke der Erfindung ist darin zu sehen, dass die Öffnung mit einer lichtdurchlässigen Abdeckung abgedeckt ist. Dadurch kann der Eintritt von Staub oder Flüssigkeiten oder sonstigen Elementen in das weitere Innere des Gehäuses verhindert werden, so dass die in dem weiteren Inneren des Gehäuses angeordnete Lichterzeugungsvorrichtung als auch die Bilderzeugungseinheit durch diese Einflüsse nicht beeinträchtigt werden. Darüber hinaus umfasst die Projektionsvorrichtung eine zur Abdeckung insbesondere separate und lichtundurchlässige Blende. Diese Blende, die auch ein Abschattungselement ist, ist in einem Winkel zur Abdeckung angeordnet und darüber hinaus zumindest benachbart zu dieser Abdeckung positioniert. In besonders vorteilhafter Weise wird durch diese Blende und ihre Anordnung erreicht, dass die Wahrnehmung des virtuellen Bilds durch einen Beobachter positiv beeinflusst wird. Unerwünschte Reflexionsstrahlung und des Weiteren unerwünschte zusätzliche Strahlung, die nicht aus dem Inneren des Gehäuses von der Bilderzeugungseinheit kommt, kann dadurch zumindest bereichsweise abgeschattet werden beziehungsweise ausgeblendet werden. Die Wahrnehmung des virtuellen Bilds durch einen Beobachter kann dadurch deutlich verbessert werden.

Erfindungsgemäß ist vorgesehen, dass die Blende derart zur Abdeckung angeordnet ist, dass eine an der Abdeckung in eine vom Außenspiegel abgewandte Richtung reflektierte Sonnenstrahlung auf die Blende trifft. Es ist somit bei dieser Ausgestaltung erreicht, dass eine ganz spezifische, das virtuelle Bild ungünstig beeinflussende Strahlung, nämlich die Sonnenstrahlung, die an der Abdeckung in Richtung eines Beobachters des Außenspiegels reflektiert wird, durch diese Anordnung und durch die Blende generell daran gehindert wird, dass sie zum Beobachter gelangt beziehungsweise direkt ungehindert in Richtung zum Beobachter gelangen würde. Durch dieses Ausblenden dieser spezifisch reflektierten Sonnenstrahlung wird der Beobachter bei der Wahrnehmung des virtuellen Bilds auch nicht geblendet und darüber hinaus auch das virtuelle Bild nicht negativ beeinflusst.

In einer weiteren vorteilhaften Ausführung ist vorgesehen, dass die Blende derart zur Abdeckung angeordnet ist, dass eine Sonnenstrahlung, die am Außenspiegel vorbei strahlt, jedoch in Richtung zum Außenspiegel direkt gelangen würde, durch die Blende ausgeblendet wird, so dass diese Sonnenstrahlung grundsätzlich gar nicht zu der Abdeckung gelangt und somit auch dort nicht reflektiert werden kann. Die Blende fungiert gerade bei dieser Ausgestaltung somit dann als zumindest bereichsweises Dach für die Abdeckung, um das Eintreffen dieser Sonnenstrahlung auf der Abdeckung zu verhindern.

In einer weiteren vorteilhaften Ausführung ist vorgesehen, dass die Abdeckung uneben ausgebildet ist. Insbesondere ist die Abdeckung gekrümmt ausgebildet, vorzugsweise mit Blickrichtung vom Außenspiegel zu der Abdeckung dann vom Außenspiegel weg gekrümmt und somit aus Blickrichtung vom Außenspiegel konvex gekrümmt ist. Eine derartige Ausgestaltung der Abdeckung begünstigt die oben genannten Vorteile nochmals. Denn durch diese Unebenheit und die insbesondere bevorzugt angegebene Krümmungsausgestaltung wird bereits im gewissen Maße erreicht, dass auftreffende Sonnenstrahlung ohnehin in deutlich reduziertem Maße in Richtung des Beobachters reflektiert wird.

In einer weiteren vorteilhaften Ausführung ist vorgesehen, dass die Blende in einem Winkel zwischen 50°und 110° insbesondere zwischen 60°und 90° zur Abdeckung angeordnet ist. Diese spezifische Winkelanordnung der genannten Komponenten zueinander ist eine besonders vorteilhafte Ausführung zur Erreichung der oben genannten Vorteile.

In einer vorteilhaften Ausführung ist bei einer Projektionsbetrachtung von oben auf die Projektionsvorrichtung vorgesehen, dass die Blende bereichsweise in der Fläche der Abdeckung angeordnet ist, insbesondere vollständig darin angeordnet ist. Darüber hinaus sind die geometrische Ausgestaltung und die Anordnung der Blende zur Abdeckung jedoch so ausgebildet, dass bei dieser Projektionsbetrachtung die Fläche der Abdeckung nur bereichsweise und somit nicht vollständig von der Blende bedeckt ist. Durch diese Geometrien und durch diese Anordnungen der multifunktionalen Anforderungen im Hinblick auf bestmögliche Vermeidung einer Sonnenstrahlenreflektion zum Beobachter einerseits als auch einer umfänglichen und uneingeschränkten Abstrahlung des virtuellen Bilds aus dem Gehäuse durch die Abdeckung zum Außenspiegel, ist eine Verbesserung der Wahrnehmung und des Erkennens des virtuellen Bilds für einen Beobachter erreicht.

Vorzugsweise ist vorgesehen, dass das Gehäuse eine Mulde aufweist, die insbesondere an einer Decke des Gehäuses ausgebildet ist. Die Mulde stellt somit auch eine Vertiefung dar, wobei an einem unteren Muldenende die Öffnung ausgebildet ist. Dies bedeutet, dass die Mulde keinen geschlossenen Boden aufweist, sondern dort zumindest bereichsweise mit einer Aussparung beziehungsweise einem Loch ausgebildet ist, welches durch die Öffnung gebildet ist. Durch eine derartige nach unten beziehungsweise zum Inneren des Gehäuses hin versenkte Position der Abdeckung an der Öffnung werden die oben genannten Vorteile nochmals verbessert. Da durch diese eingebettete beziehungsweise versenkte Anordnung der Abdeckung die Sonneneinstrahlung ohnehin bereits reduziert ist und anderweitige unerwünschte Reflexionseffekte vermieden oder zumindest deutlich reduziert werden können, lassen sich die oben genannten Vorteile im besonderen Maße erreichen. Darüber hinaus ist durch diese Ausgestaltung die Abdeckung auch geschützt angeordnet, so dass sie vor Beschädigungen, wie beispielsweise einem Verkratzen oder dergleichen, geschützt werden kann, und andererseits auch ein Verschmieren oder sonstiges Verdrecken der Abdeckung vermieden werden kann.

Vorzugsweise ist vorgesehen, dass die Blende sich zwischen dem unteren Muldenende und einem oberen Muldenende, welcher einen Muldeneingang darstellt, erstreckt. Durch diese örtlich spezifizierte Anordnung und Dimensionierung ist auch die Blende vollumfänglich geschützt angeordnet. Darüber hinaus steht sie nicht unerwünscht über diese Deckenwand beziehungsweise die Decke des Gehäuses über, so dass sie auch nicht unerwünscht im Blickfeld eines Beobachters liegt, der auf den Außenspiegel blickt, um das virtuelle Bild wahrnehmen zu können.

Insbesondere ist vorgesehen, dass die Blende an einer Muldenwand angeordnet ist, wobei die Muldenwand die Mulde entsprechend begrenzt. Durch diese Ausgestaltung sind auch die bereits oben genannten Vorteile bekräftigt und darüber hinaus ist die Blende auch mechanisch stabil und sicher anbringbar.

Vorzugsweise ist vorgesehen, dass die Blende ausgehend von einem der Abdeckung zugewandten unteren Rand hin zu einem der Abdeckung abgewandten oberen Rand betrachtet zu dem Außenspiegel hin geneigt angeordnet ist. Diese relative Positionierung der Blende zur Abdeckung einerseits und zum Außenspiegel andererseits ermöglicht eine möglichst umfängliche Ausblendung beziehungsweise Abschattung von Sonnenstrahlung, die ansonsten zum Beobachter gelangen würde.

Vorzugsweise ist vorgesehen, dass die Blende zu einem von dem aus dem Gehäuse durch die Abdeckung hindurch in Richtung zum Außenspiegel und das virtuelle Bild bildenden Lichtstrahlengang in einem Winkel kleiner +/- 10° insbesondere kleiner +/- 5°, insbesondere parallel, angeordnet ist. Dadurch ist die Blende allenfalls nur in sehr geringem Maße in den Lichtstrahlengang ragend, der durch die Abdeckung hindurch zum Außenspiegel gelangt. Die Beeinträchtigung des virtuellen Bilds durch die Blende ist dadurch minimiert.

Vorzugsweise ist vorgesehen, dass die Blende die reflektierten Sonnenstrahlen beziehungsweise die reflektierte Sonnenstrahlung zumindest anteilig absorbierend ausgebildet ist. Dadurch wird verhindert, dass unerwünscht zur Blende gelangende Sonnenstrahlung wiederum unerwünscht von dieser weiter zum Fahrer reflektiert werden würde.

Vorzugsweise ist vorgesehen, dass die Abdeckung als Folie ausgebildet ist. Dadurch kann sie sehr dünn und gewichtsminimiert ausgebildet sein und ein unerwünschtes Beeinträchtigen der das virtuelle Bild erzeugten Lichtstrahlen beim Hindurchtritt durch die Abdeckung kann vermieden werden.

Vorzugsweise ist vorgesehen, dass in einer Reihenanordnung betrachtet die Abdeckung zwischen dem Außenspiegel und der Blende angeordnet ist und ein dem Außenspiegel zugewandter Rand der Abdeckung näherliegend zum Außenspiegel angeordnet ist, als ein dem Außenspiegel zugewandter Rand der Blende. Auch dadurch sind weitere entsprechende Vorteile zu erreichen, um das virtuelle Bild möglichst umfänglich zum Außenspiegel strahlen zu können und andererseits möglichst maximal das Abstrahlen von Sonnenstrahlung zum Beobachter hin zu vermeiden.

Des Weiteren betrifft die Erfindung auch ein Kraftfahrzeug mit einer erfindungsgemäßen Projektionsvorrichtung und einer vorteilhaften Ausgestaltung davon.

Insbesondere ist der Außenspiegel der Projektionsvorrichtung beabstandet zu einer Innenseite einer Windschutzscheibe des Kraftfahrzeugs angeordnet und stellt in dem Zusammenhang ein zur Windschutzscheibe separates Bauteil dar. Das auf den Außenspiegel treffende virtuelle Bild wird von dem Außenspiegel in eine von der Innenseite der Windschutzscheibe abgewandte Richtung und somit zum Beobachter hin reflektiert.

Durch die Erfindung wird somit eine Projektionsvorrichtung beziehungsweise ein System vorgeschlagen, bei welchem die Abdeckung, die insbesondere als Folie ausgebildet ist, derart positioniert ist, dass störende Sonnenstrahlung, welche durch Reflexion an Komponenten der Projektionsvorrichtung dann über den Außenspiegel zum Beobachter gelangen könnte und durch Reflexion an einer Komponente der Projektionsvorrichtung dann über die Windschutzscheibe zum Beobachter gelangen könnte, abgeschattet beziehungsweise ausgeblendet wird, was durch die Blende erfolgt. Insbesondere durch die versenkte beziehungsweise vertiefte Anordnung der Abdeckung in dem Inneren des Gehäuses der Projektionsvorrichtung und/oder die gekrümmte Ausgestaltung der Abdeckung sowie deren Position in Verbindung mit der Blende ermöglicht dieses Ausblenden der kritischen Sonnenstrahlung oder ermöglicht, dass diese Sonnenstrahlung gar nicht auf die Abdeckung trifft.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Ausführungsbeispiele der Erfindung werden nachfolgend anhand schematischer Zeichnungen näher erläutert.

Dabei zeigen:
- Fig. 1: eine schematische Schnittdarstellung durch ein Ausführungsbeispiel eines erfindungsgemäßen Kraftfahrzeugs mit einem Ausführungsbeispiel einer erfindungsgemäßen Projektionsvorrichtung;
- Fig. 2: eine Schnittdarstellung durch die Ausgestaltung einer Projektionsvorrichtung, wie sie in Fig. 1 verbaut sein kann; und
- Fig. 3: eine perspektivische Darstellung der Ausgestaltung der Projektionsvorrichtung gemäß Fig. 2.

In den Figuren werden gleiche oder funktionsgleiche Elemente mit den gleichen Bezugszeichen versehen.

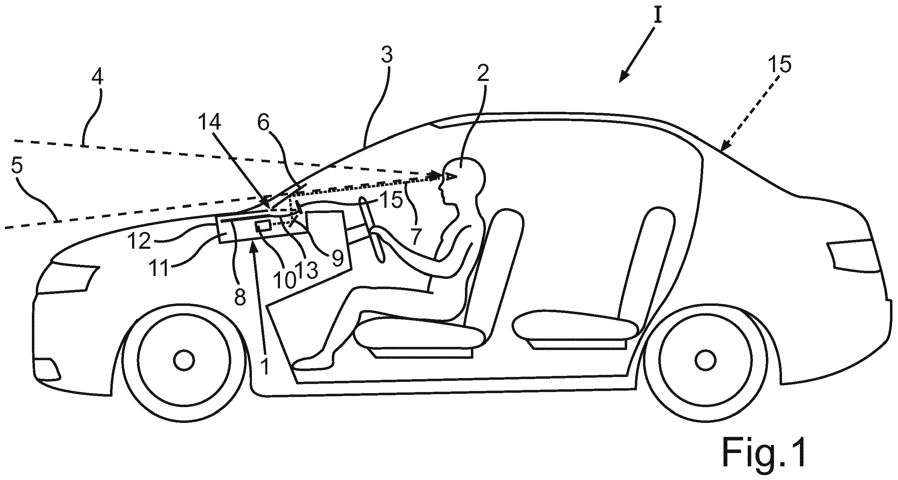

Fig. 1 zeigt eine schematische Schnittdarstellung eines Kraftfahrzeugs I mit einer eingebauten beispielhaften Ausführungsform einer erfindungsgemäßen Projektionsvorrichtung 1, welche hier als Kopf-oben-Anzeigevorrichtung ausgebildet und angeordnet ist. Die Projektionsvorrichtung 1 ist hier beispielhaft in ein Armaturenbrett eines Kraftfahrzeugs I in einer Fahrtrichtung vor einem Fahrer 2 angeordnet. Der Fahrer 2 nimmt durch eine Windschutzscheibe 3 des Kraftfahrzeugs I einfallendes Licht aus einer Umgebung des Kraftfahrzeugs I wahr. Auf einem ersten Lichtweg 4 gelangt Licht aus der Umgebung direkt in das Auge des Fahrers 2. Licht, welches über einen zweiten Lichtweg 5 zum Auge des Fahrers 2 gelangt, durchdringt erst die Windschutzscheibe 3 und dann einen Spiegel 6 der Projektionsvorrichtung 1, da der Spiegel 6 insbesondere teildurchlässig für Licht ist.

Licht, welches auf dem zweiten Lichtweg 5 zu dem Fahrer 2 gelangt, wird jedoch zusätzlich mit einem Licht überlagert, welches auf einem teilweise mit dem zweiten gleichen, dritten Lichtweg 7 zu dem Fahrer 2 gelangt. Auf dem dritten Lichtweg 7 gelangt ein Licht zu dem Fahrer 2, welches von einer Lichterzeugungsvorrichtung 8 der Projektionsvorrichtung 1 ausgestrahlt und zum Anzeigen einer Information auf den Spiegel 6 der Projektionsvorrichtung 1 projiziert wird. Im gezeigten Beispiel ist zum Verlängern des optischen Weges bei geringem Bauraumverbrauch ein weiterer, gewöhnlicher Spiegel 9 der Projektionsvorrichtung 1 in den dritten Lichtweg 7 eingebracht.

Die Projektionsvorrichtung 1 umfasst neben der Lichterzeugungsvorrichtung 8 eine Bilderzeugungseinheit 10, die ebenso wie die Lichterzeugungsvorrichtung 8 als auch der Spiegel 9 in einem Inneren 11 eines Außengehäuses 12 der Projektionsvorrichtung 1 angeordnet sind. Der Spiegel 6, der einen Außenspiegel darstellt und gemäß der Ausgestaltung der Projektionsvorrichtung 1 auch als Kombinierspiegel bezeichnet ist, ist an dem Gehäuse 12 angeordnet und in einer ausgefahrenen Gebrauchsstellung, wie sie in Fig. 1 gezeigt ist, nach oben geklappt. Das von der Lichterzeugungsvorrichtung 8 mittels zumindest einer, insbesondere mehrerer Lichtquellen erzeugte Licht wird von dort zur Bilderzeugungseinheit 10 geleitet, die beispielsweise auch ein TFT-Display sein kann. Durch diese Bilderzeugungseinheit 10 werden dann diejenigen Lichtstrahlen aus dem von der Lichterzeugungsvorrichtung 8 erzeugten Lichtstrahlenbündel durchgelassen, die dann das virtuelle Bild erzeugen beziehungsweise darstellen.

Darüber hinaus umfasst die Projektionsvorrichtung 1 eine Abdeckung 13, die eine Öffnung 14 im Gehäuse 12 abdeckt. Die Abdeckung 13 ist gekrümmt ausgebildet, insbesondere von Richtung des Spiegels 6 betrachtet konvex gekrümmt und stellt insbesondere eine Folie dar.

Darüber hinaus umfasst die Projektionsvorrichtung 1 eine zur Abdeckung 13 separate Blende 15, die benachbart, insbesondere an die Abdeckung 13, angrenzend angeordnet ist.

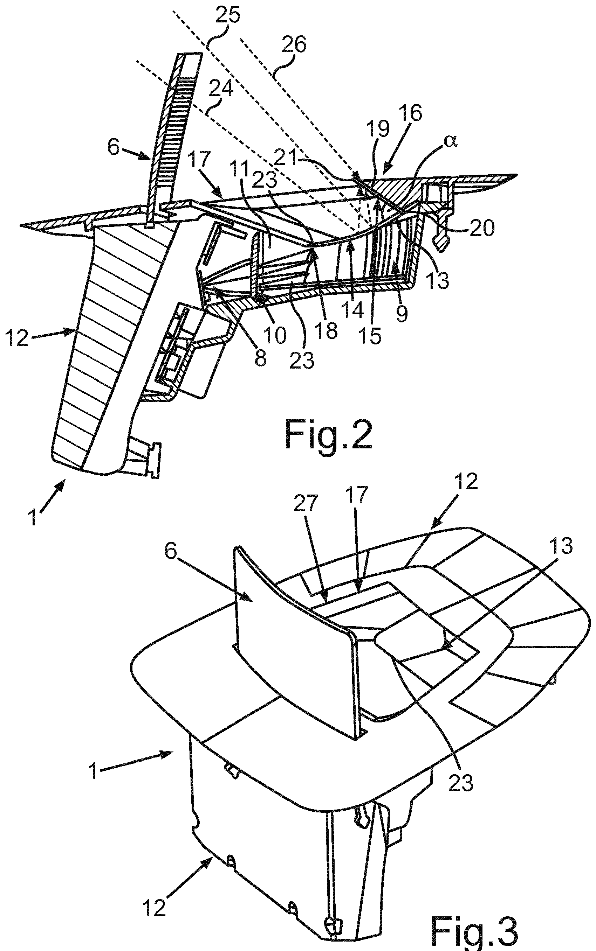

Zur weiteren Erläuterung wird auf Fig. 2 und Fig. 3 verwiesen. In Fig. 2 ist die Projektionsvorrichtung 1 in einer Vertikalschnittdarstellung entsprechend Fig. 1 gezeigt. Wie hier zu erkennen ist, umfasst das Gehäuse 12 an einer Deckenwand 16 eine Vertiefung beziehungsweise eine Mulde 17. Diese Mulde 17 erstreckt sich somit in das Innere 11 des Gehäuses 12. Ein unteres Muldenende 18 umfasst die Öffnung 14, so dass die Öffnung 14 gegenüber der Deckenwand 16 nach unten versetzt beziehungsweise versenkt ist. Wie zu erkennen ist, ist somit auch die Abdeckung 13, die an der Öffnung 14 angeordnet ist beziehungsweise diese Öffnung 14 abdeckt und verschließt somit nach unten versetzt angeordnet. Die Mulde 17 ist kanalartig gestaltet und zu dem Spiegel 6 in seiner in Fig. 2 auch gezeigten Gebrauchsstellung hin orientiert. Die Blende 15 ist in dieser Vertikalschnittdarstellung in einem Winkel α zwischen 50°und 110°, insbesondere zwischen 60°und 90°zur Abdeckung 14 angeordnet, w obei bei insbesondere zumindest einer unebenen Ausgestaltung von einer dieser beiden Komponenten bezüglich dieser Winkelbestimmung die Tangente an dem jeweiligen Punkt, an dem sich die Komponenten schneiden, betrachtet wird.

Wie in Fig. 2 zu erkennen ist, ist die Blende 15 auch versenkt in dieser Mulde 17 angeordnet. Sie ist in dem Zusammenhang vorzugsweise an einer die Mulde 17 begrenzenden Muldenwand 19 angeordnet, insbesondere im Wesentlichen vollflächig daran angeordnet. Die Blende 15 ist darüber hinaus derart positioniert, dass sie mit einem unteren, der Abdeckung 9 zugewandten Rand 20 weiter entfernt zum Außenspiegel 6 angeordnet ist, als ein diesem unterem Rand 20 gegenüberliegender oberer Rand 21 dieser Blende 15. Dies bedeutet, dass die Blende 15 ausgehend von diesem der Abdeckung 9 zugewandten unteren Rand 20 hin zu einem der Abdeckung 9 abgewandten oberen Rand 21 betrachtet zu dem Außenspiegel 6 hin geneigt angeordnet ist.

Darüber hinaus ist insbesondere vorgesehen, dass die Blende 15 so zur Abdeckung 9 orientiert ist, dass das virtuelle Bild erzeugende Licht 22, welches an dem weiteren Spiegel 9 reflektiert wird, einen Winkel kleiner +/- 10°, insbesondere kleiner +/- 5°, insbesondere parallel, dazu angeordnet ist. Dies bedeutet, dass diejenigen Lichtstrahlen, die an diesem Spiegel 9 durch die Abdeckung 13 hindurch zum Außenspiegel 6 abgestrahlt werden, auf dem Weg zwischen der Abdeckung 13 an dem Außenspiegel 6 entsprechend diesen Winkelangaben zu der Blende 15 orientiert sind.

Die Blende 15 ist vorzugsweise so ausgebildet, dass sie Sonnenstrahlung zumindest anteilig auch absorbieren kann.

Gemäß der Darstellung in Fig. 2 ist auch zu erkennen, dass in einer Reihenanordnung in Richtung einer Fahrzeuglängsachse ausgehend von der Windschutzscheibe 3 betrachtet eine Komponentenreihe folgend mit dem Außenspiegel 6, der Abdeckung 13 und der Blende 15 ausgebildet ist. Die Blende 15 überlappt in dieser Reihenfolgenbetrachtung mit der Abdeckung 13, allerdings ist ein dem Außenspiegel 6 zugewandter Rand 23 der Abdeckung 13 dem Außenspiegel 6 näherliegend positioniert, als der obere Rand 21 der Blende 15.

Bei einer Projektionsbetrachtung der Projektionsvorrichtung 1 von oben und somit bei einer Betrachtung in der Fahrzeughochachse ist die Blende 15 überlappend mit der Abdeckung 13 ausgebildet, insbesondere innerhalb der Flächenausmaße der Abdeckung 13 angeordnet.

Durch die Blende 15, und insbesondere ihre Anordnung ist erreicht, dass Sonnenstrahlung 24, die durch die Windschutzscheibe 3 und auch den Außenspiegel 6 einfällt und von dort auf die Abdeckung 13 fällt, von der Blende 15 abgeschattet wird beziehungsweise ausgeblendet wird und nicht zu dem Fahrer 2 in dessen Blickfeld gelangt. Darüber hinaus ist es auch erreicht, dass eine weitere an der Abdeckung 13 reflektierte Sonnenstrahlung 25, die durch die Windschutzscheibe 3 einfällt, jedoch am Außenspiegel 6 vorbei einfällt, ebenfalls von der Blende 15 abgeschattet beziehungsweise ausgeblendet wird und nicht zum Fahrer 2 gelangt. Somit wird quasi durch die Blende 15 und ihre Position und Anordnung zur Abdeckung 13 erreicht, dass Sonnenstrahlung 24, 25, die an der Abdeckung 13 in Richtung von dem Außenspiegel 6 abgewandt und insbesondere in Richtung des Fahrers 2 reflektiert wird, durch die Blende 15 ausgeblendet wird und somit nicht zum Fahrer 2 gelangt.

Darüber hinaus ist die Blende 15 vorzugsweise auch so angeordnet und ausgebildet, dass eine weitere einfallende Sonnenstrahlung 26, die bei einem nicht Vorhandensein der Blende 15 auf die Abdeckung 13 treffen würde, von der Blende 15 abgeschattet wird, so dass diese Sonnenstrahlung 26 grundsätzlich erst gar nicht zur Abdeckung 13 gelangt und somit dort insbesondere auch nicht unerwünscht in Richtung zum Fahrer 2 reflektiert werden kann.

Durch die spezifische Anordnung und Krümmung der Abdeckung 13 wird auch erreicht, dass generell das Reflektieren von Sonnenstrahlung in Richtung zum Fahrer 2 bereits reduziert wird. Durch die Blende 15 wird diese Reduzierung nochmals verbessert.

In Fig. 3 ist eine perspektivische Darstellung der Projektionsvorrichtung 1 gezeigt. Dort ist auch ein Muldeneingang beziehungsweise ein oberes Muldenende 27 zu erkennen.

## Patentansprüche

1. Projektionsvorrichtung (1) zur Projektion eines virtuellen Bilds in einem Kraftfahrzeug (I), welche ein Gehäuse (12) aufweist, in dem eine Lichterzeugungsvorrichtung (8) und eine Bilderzeugungseinheit (10) zur Erzeugung des virtuellen Bilds aus dem von der Lichterzeugungsvorrichtung (8) emittierten Licht angeordnet sind, wobei das Gehäuse (12) eine Öffnung (14) aufweist, durch welche das virtuelle Bild aus dem Gehäuse (12) zu einem an dem Gehäuse (12) angeordneten Außenspiegel (6) der Projektionsvorrichtung (1) abstrahlbar ist, wobei die Öffnung (14) mit einer Licht durchlässigen Abdeckung (13) abgedeckt ist und eine Licht undurchlässige Blende (15) in einem Winkel (α) zur Abdeckung (13) und zumindest benachbart zur Abdeckung (13) angeordnet ist,
**dadurch gekennzeichnet, dass**
die Blende (15) derart zur Abdeckung (13) angeordnet ist, dass eine an der Abdeckung (13) in eine vom Außenspiegel (6) abgewandte Richtung reflektierte Sonnenstrahlung (24, 25) auf die Blende (15) trifft.

2. Projektionsvorrichtung (1) nach Anspruch 1,
**dadurch gekennzeichnet, dass**
die Abdeckung (13) uneben, insbesondere vom Außenspiegel (6) weg gekrümmt ausgebildet ist.

3. Projektionsvorrichtung (1) nach einem der vorhergehenden Ansprüche,
**dadurch gekennzeichnet, dass**
die Blende (15) in einem Winkel (α) zwischen 50° und 110°, insbesondere zwischen 60° und 90°, zur Abdeckung (13) angeordnet ist.

4. Projektionsvorrichtung (1) nach einem der vorhergehenden Ansprüche,
**dadurch gekennzeichnet, dass**
das Gehäuse (12) eine Mulde (17) aufweist, und an einem unteren Muldenende (18) die Öffnung (14) ausgebildet ist.

5. Projektionsvorrichtung (1) nach Anspruch 4,
**dadurch gekennzeichnet, dass**
die Blende (15) sich zwischen dem unteren Muldenende (18) und einem oberen Muldenende (27) der Mulde (17) erstreckt.

6. Projektionsvorrichtung (1) nach Anspruch 3 oder 5,
**dadurch gekennzeichnet, dass**
die Blende (15) als separates Bauteil zur Mulde (17) an einer den Kanal der Mulde (17) begrenzenden Muldenwand (19) angeordnet ist.

7. Projektionsvorrichtung (1) nach einem der vorhergehenden Ansprüche,
**dadurch gekennzeichnet, dass**
die Blende (15) ausgehend von ihrem der Abdeckung (13) zugewandten unteren Rand (20) hin zu ihrem der Abdeckung (13) abgewandten oberen Rand (21) betrachtet zu dem Außenspiegel (6) hin geneigt angeordnet ist.

8. Projektionsvorrichtung (1) nach einem der vorhergehenden Ansprüche,
**dadurch gekennzeichnet, dass**
die Blende (15) zu einem von dem aus dem Gehäuse (12) durch die Abdeckung (13) hindurch in Richtung zum Außenspiegel (6) und das virtuelle Bild bildenden Lichtstrahlengang in einem Winkel kleiner +/- 10°, insbesondere kleiner +/- 5°, insbesondere parallel, angeordnet ist.

9. Projektionsvorrichtung (1) nach einem der vorhergehenden Ansprüche,
**dadurch gekennzeichnet, dass**
die Blende (15) die an der Abdeckung (13) reflektierte Sonnenstrahlung (24, 25) zumindest anteilig absorbierend ausgebildet ist.

10. Projektionsvorrichtung (1) nach einem der vorhergehenden Ansprüche,
**dadurch gekennzeichnet, dass**
die Abdeckung (13) als Folie ausgebildet ist.

11. Projektionsvorrichtung (1) nach einem der vorhergehenden Ansprüche,
**dadurch gekennzeichnet, dass**
in einer Reihenanordnung, insbesondere in Richtung einer Längsachse des Kraftfahrzeugs (I), betrachtet die Abdeckung (13) zwischen dem Außenspiegel (6) und der Blende (15) angeordnet ist und ein dem Außenspiegel (6) zugewandter Rand (23) der Abdeckung (13) näher liegend zum Außenspiegel (6) angeordnet ist, als ein dem Außenspiegel (6) zugewandter Rand (20) der Blende (15).

12. Kraftfahrzeug (I) mit einer Projektionsvorrichtung (1) nach einem der vorhergehenden Ansprüche.

13. Kraftfahrzeug (I) nach Anspruch 12,
**dadurch gekennzeichnet, dass**
der Außenspiegel (6) beabstandet zu einer einem Fahrgastraum zugewandten Innenseite einer Windschutzscheibe (3) des Kraftfahrzeugs (I) angeordnet ist, und derart angeordnet ist, dass das auf den Außenspiegel (6) treffende virtuelle Bild von dem Außenspiegel (6) in eine von der Innenseite der Windschutzscheibe (3) abgewandte Richtung insbesondere direkt zum einem Beobachter (2) reflektiert wird.

## Claims

1. Projection apparatus (1) for projecting a virtual image in a motor vehicle (I), having a housing (12) in which a light-generating apparatus (8) and an image-generating unit (10) for generating the virtual image from the light emitted by the light-generating apparatus (8) are arranged, wherein the housing (12) has an opening (14) through which the virtual image is able to be emitted from the housing (12) to an external mirror (6) of the projection apparatus (1) that is arranged on the housing (12), wherein the opening (14) is covered by a light-transmissive cover (13) and an opaque stop (15) is arranged at an angle (a) with respect to the cover (13) and at least adjacent to the cover (13),
**characterized in that**
the stop (15) is arranged relative to the cover (13) such that solar radiation (24, 25) which is reflected at the cover (13) in a direction facing away from the external mirror (6) is incident on the stop (15).

2. Projection apparatus (1) according to Claim 1, **characterized in that**
the cover (13) is non-planar, in particular curves away from the external mirror (6).

3. Projection apparatus (1) according to either of the preceding claims,
**characterized in that** the stop (15) is arranged at an angle (a) of between 50° and 110°, in particular between 60° and 90°, relative to the cover (13).

4. Projection apparatus (1) according to one of the preceding claims,
**characterized in that**
the housing (12) has a depression (17), and the opening (14) is formed in a lower depression end (18).

5. Projection apparatus (1) according to Claim 4, **characterized in that** the stop (15) extends between the lower depression end (18) and an upper depression end (27) of the depression (17).

6. Projection apparatus (1) according to Claim 3 or 5, **characterized in that**
the stop (15) is arranged as a separate component from the depression (17) on a depression wall (19) that delimits the passage of the depression (17).

7. Projection apparatus (1) according to one of the preceding claims,
**characterized in that**
the stop (15) is tilted toward the external mirror (6), as viewed starting from the stop's lower edge (20), which faces the cover (13), toward the upper edge (21), which faces away from the cover (13).

8. Projection apparatus (1) according to one of the preceding claims,
**characterized in that**
the stop (15) is arranged at an angle of less than ± 10°, in particular less than ± 5°, in particular parallel, with respect to a light beam path that extends from the housing (12) through the cover (13) in the direction of the external mirror (6) and forms the virtual image.

9. Projection apparatus (1) according to one of the preceding claims,
**characterized in that**
the stop (15) is embodied to at least partially absorb the solar radiation (24, 25) that is reflected at the cover (13).

10. Projection apparatus (1) according to one of the preceding claims,
**characterized in that**
the cover (13) is embodied in the form of a sheet.

11. Projection apparatus (1) according to one of the preceding claims,
**characterized in that**,
viewed in a series arrangement, in particular in the direction of a longitudinal axis of the motor vehicle (I), the cover (13) is arranged between the external mirror (6) and the stop (15) and an edge (23) of the cover (13) that faces the external mirror (6) is arranged closer to the external mirror (6) than an edge (20) of the stop (15) that faces the external mirror (6).

12. Motor vehicle (I) having a projection apparatus (1) according to one of the preceding claims.

13. Motor vehicle (I) according to Claim 12, **characterized in that**
the external mirror (6) is arranged at a distance from a cabin-facing inner side of the windscreen (3) of the motor vehicle (I) and is arranged such that the virtual image that is incident on the external mirror (6) is reflected by the external mirror (6) into a direction away from the inner side of the windscreen (3), in particular directly to an observer (2).

## Revendications

1. Dispositif de projection (1) destiné à projeter une image virtuelle dans un véhicule automobile (I), lequel possède un boîtier (12) dans lequel sont disposés un dispositif de génération de lumière (8) et une unité de génération d'images (10) destinée à générer l'image virtuelle à partir de la lumière émise par le dispositif de génération de lumière (8), le boîtier (12) possédant une ouverture (14) à travers laquelle l'image virtuelle peut être rayonnée depuis le boîtier (12) vers un miroir extérieur (6) du dispositif de projection (1) disposé sur le boîtier (12), l'ouverture (14) étant recouverte par un couvercle (13) transparent et un obturateur (15) opaque étant disposé à un angle (α) par rapport au couvercle (13) et au moins voisin du couvercle (13), **caractérisé en ce que**
l'obturateur (15) est disposé par rapport au couvercle (13) de telle sorte qu'un rayonnement solaire (24, 25) réfléchi au niveau du couvercle (13) dans une direction à l'opposé du miroir extérieur (6) vient frapper l'obturateur (15) .

2. Dispositif de projection (1) selon la revendication 1, **caractérisé en ce que** le couvercle (13) est de configuration irrégulière, notamment courbé en s'écartant du miroir extérieur (6).

3. Dispositif de projection (1) selon l'une des revendications précédentes, **caractérisé en ce que** l'obturateur (15) est disposé à un angle (α) entre 50° et 110°, notamment entre 60° et 90°, par rapport au couvercle (13).

4. Dispositif de projection (1) selon l'une des revendications précédentes, **caractérisé en ce que** le boîtier (12) possède une cuvette (17) et l'ouverture (14) est formée à une extrémité inférieure de cuvette (18).

5. Dispositif de projection (1) selon la revendication 4, **caractérisé en ce que** l'obturateur (15) s'étend entre l'extrémité inférieure de cuvette (18) et une extrémité supérieure de cuvette (27) de la cuvette (17) .

6. Dispositif de projection (1) selon la revendication 3 ou 5, **caractérisé en ce que** l'obturateur (15) est disposé en tant qu'élément structural séparé de la cuvette (17) au niveau d'une paroi de cuvette (19) qui délimite le canal de la cuvette (17).

7. Dispositif de projection (1) selon l'une des revendications précédentes, **caractérisé en ce que** l'obturateur (15), vu en direction du miroir extérieur (6), est disposé incliné à partir de son bord inférieur (20) faisant face au couvercle (13) et jusqu'à son bord supérieur (21) qui est à l'opposé du couvercle (13).

8. Dispositif de projection (1) selon l'une des revendications précédentes, **caractérisé en ce que** l'obturateur (15) est disposé à un angle inférieur à +/-10°, notamment inférieur à +/-5°, en particulier parallèle par rapport à un trajet de rayon lumineux passant du boîtier (12) à travers le couvercle (13) en direction du miroir extérieur (6) et formant l'image virtuelle.

9. Dispositif de projection (1) selon l'une des revendications précédentes, **caractérisé en ce que** l'obturateur (15) est configuré pour absorber au moins proportionnellement le rayonnement solaire (24, 25) réfléchi sur le couvercle (13).

10. Dispositif de projection (1) selon l'une des revendications précédentes, **caractérisé en ce que** le couvercle (13) est réalisé sous la forme d'un film.

11. Dispositif de projection (1) selon l'une des revendications précédentes, **caractérisé en ce que** le couvercle (13) est disposé entre le miroir extérieur (6) et l'obturateur (15) dans un arrangement en ligne, notamment vu dans la direction d'un axe longitudinal du véhicule automobile (I), et un bord (23) du couvercle (13) qui fait face au miroir extérieur (6) est disposé plus proche du miroir extérieur (6) qu'un bord (20) de l'obturateur (15) qui fait face au miroir extérieur (6).

12. Véhicule automobile (I) comprenant un dispositif de projection (1) selon l'une des revendications précédentes.

13. Véhicule automobile (I) selon la revendication 12, **caractérisé en ce que** le miroir extérieur (6) est disposé espacé d'un côté intérieur d'un pare-brise (3) du véhicule automobile (I) faisant face à un habitacle et disposé de telle sorte que l'image virtuelle incidente sur le miroir extérieur (6) est réfléchie par le miroir extérieur (6) dans une direction à l'opposé du côté intérieur du pare-brise (3), notamment directement vers un observateur (2).
